Europäisches Patentamt

European Patent Office

Office européen des brevets

(19)

(11) **EP 1 160 537 A2**

(12) **EUROPÄISCHE PATENTANMELDUNG**

| | |
|---|---|
| (43) Veröffentlichungstag:<br>**05.12.2001 Patentblatt 2001/49** | (51) Int Cl.$^7$: **G01B 11/02** |

(21) Anmeldenummer: **01110942.8**

(22) Anmeldetag: **05.05.2001**

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI** | (72) Erfinder:<br>• **Adamietz, Hubert**<br>  **73760 Ostfildern (DE)**<br>• **Ojemann, Folke**<br>  **73760 Ostfildern-Nellingen (DE)** |
| (30) Priorität: **29.05.2000 DE 10026625** | (74) Vertreter: **Patentanwälte**<br>**Ruff, Wilhelm, Beier, Dauster & Partner**<br>**Postfach 10 40 36**<br>**70035 Stuttgart (DE)** |
| (71) Anmelder: **Omron Electronics Manufacturing of Germany GmbH**<br>**71154 Nufringen (DE)** | |

(54) **Triangulations-Sensor**

(57)  Bei einem Triangulations-Sensor (10) mit einem Lichtsender (12) und mit einem eine PD (17) enthaltenden, aus von einem Objekt (15, 15') reflektierten Licht ein Abstandssignal bildenden optischen Detektor wird vorgesehen, dass zwischen dem Lichtsender (12) und der PD (17) eine einen äußeren Lichtspot und wenigstens einen inneren Lichtspot mit höherer Intensität bildende Lichtstrahlenverteileinrichtung vorgesehen ist.

**Fig. 1**

EP 1 160 537 A2

**Beschreibung**

Die Erfindung betrifft einen Triangulations-Sensor mit einem Lichtsender und mit einem aus von einem Objekt reflektiertem Licht des Lichtsensors ein Abstandssignal bildenden optischen Detektor, der wenigstens zwei nebeneinander angeordnete Empfangsflächen hat.

In der Automatisierungs-Technik werden optische Taster eingesetzt, beispielsweise um die Position von vorbeigeführten Objekten zu erkennen. Ein Triangulations-Sensor ist ein derartiger optischer Taster, der eine Hintergrund- und Vordergrundausblendung ermöglicht. Zusätzlich wird auch eine relativ hohe Immunität gegen Fremdlicht gefordert. Bei derartigen Triangulations-Sensoren besteht das Problem, dass sich die Position der Abbildung auf den Empfangsflächen beispielsweise einer PD nicht linear mit dem Abstand des Objektes ändert.

Bei kleinen Tastweiten ist die Veränderung der Position relativ groß, während sie bei größeren Tastweiten klein ist. Dies führt zu einer Kennlinie, die bei kleinen Tastweiten steil ansteigt, bei größeren Tastweiten jedoch sehr flach ist. Damit verringert sich bei einer gleichmäßigen Quantisierung des Mess-Signals mit zunehmendem Tastabstand die Auflösung. Dieses Problem wird dadurch noch verstärkt, dass bei größeren Tastabständen und nur schwach reflektierenden Objekten das Empfangssignal relativ schwach ist. Um dieses Problem zu beherrschen, ist es bekannt, derartige Triangulations-Sensoren mechanisch auf die benötigte Tastweite einzustellen. Diese mechanische Einstellung hilft jedoch dann nicht weiter, wenn der Triangulations-Sensor so eingesetzt werden soll, dass die Tastweite elektronisch einstellbar (teachbar) sein soll.

Zum Stand der Technik gehört auch ein Triangulationsmessverfahren mit einem Detektor, der ein PSD (Position Sensitive Device) enthält. Bei diesem Verfahren wird der Schwerpunkt des reflektierten Strahls auf dem Sensor erfasst.

Des weiteren ist ein Triangulationsverfahren mit einem CCD-Sensor bekannt. Diese Lösung ist einerseits teuer und weist andererseits nur eine relativ schwache Immunität gegen Fremdlicht auf. Darüber hinaus sind kurze Reaktionszeiten nicht realisierbar.

Darüber hinaus sind auch optische Taster bekannt, bei welchen die Licht-Laufzeit ausgewertet wird. Diese optischen Taster sind einerseits aufwendig und teuer und andererseits für kleine Tastweiten von weniger als 1 m nicht gut geeignet.

Der Erfindung liegt die Aufgabe zugrunde, einen Triangulations-Sensor der eingangs genannten Art zu schaffen, der in einem relativ großen Bereich des Tastabstandes genaue Abstandssignale liefert und der deshalb einen in einem größeren Bereich elektronisch einstellbaren Tastabstand ermöglicht.

Diese Aufgabe wird dadurch gelöst, dass zwischen dem Lichtsender und dem Detektor eine einen äußeren Lichtspot und wenigstens einen inneren, eine höhere Intensität aufweisenden Lichtspot bildende Lichtstrahlen-Verteileinrichtung angeordnet ist.

Bei der erfindungsgemäßen Lösung werden die reflektierten Lichtstrahlen verteilt auf dem Detektor überlagert abgebildet und gemeinsam so ausgewertet, dass insgesamt eine relativ gute Linearität zwischen Abstandssignal und Abstand des Objektes gegeben ist. Dieser Triangulations-Sensor ist daher in einem großen Tastbereich elektronisch auf einen Tastabstand einstellbar (teachbar). Die räumliche Lichtintensitätsverteilung wird so beeinflusst, dass es mindestens zwei verschiedene Lichtspots mit unterschiedlicher Lichtintensität und unterschiedlichem Durchmesser gibt, die überlagert abgebildet werden. Daraus resultiert eine Gesamtlichtintensitätsverteilung mit einem ungewöhnlichen, von der Gauß'schen Verteilung abweichenden Verlauf. Es wird ein kleiner Lichtspot einem breiten Lichtspot überlagert, so dass ein breiter Lichtspot entsteht, der beispielsweise in der Mitte eine erhöhte Lichtintensität aufweist.

Um die Tastweite eines Triangulations-Sensors zu vergrößern, wird vorgesehen, dass der PD eine Sammeloptik zugeordnet ist, die Mittel enthält, um einen Lichtspot quer zu einem Spalt zwischen zwei Elementen der PD zu vergrößern und/oder in Richtung parallel zu diesem Spalt zu verkleinern. Durch die Verbreiterung des Lichtspots wird erreicht, dass dieser über einen größeren Bereich des Objektabstandes in dem Bereich verbleibt, in welchem er über beide Elemente der PD verteilt ist, so dass über einen größeren Bereich auswertbare Signale erzeugt werden.

Weitere Merkmale und Vorteile der Erfindung ergeben sich aus den Unteransprüchen und den Erläuterungen der Erfindung anhand der beigefügten Zeichnungen.

Fig. 1　　　　zeigt eine Prinzipdarstellung eines erfindungsgemäßen Triangulations-Sensors,

Fig. 2　　　　ein Diagramm zur Erläuterung des Problems eines derartigen Triangulations-Sensors,

Fig. 3A und 3B　　Schnitte durch Sammeloptiken eines erfindungsgemäßen Triangulations-Sensors,

Fig. 4　　　　eine Darstellung der auf einer PD abgebildeten Lichtspots,

Fig. 5　　　　ein Diagramm zur Erläuterung der Verteilung der Lichtintensität innerhalb der Lichtspots nach Fig. 4 und

Fig. 6　　　　den Verlauf der Abstandssignale über die Tastweite bei einem erfin-

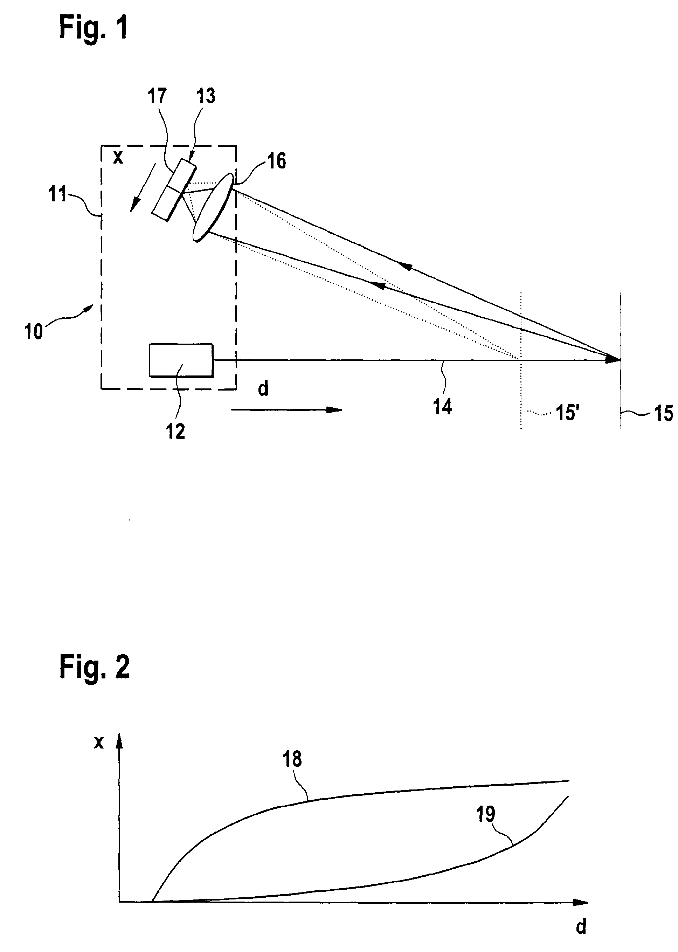

Der in Fig. 1 dargestellte Triangulations-Sensor 10 enthält in einem gemeinsamen Gehäuse 11 einen Lichtsender 12 und einen optischen Detektor 13. Der Lichtsender 12, der in der Regel mit einer nicht dargestellten Ausgangsoptik versehen ist, sendet zu einem Strahl 14 gebündeltes Licht aus. Der Lichtstrahl 14 trifft beispielsweise auf ein in unterschiedlichen Abständen vorbeibewegtes Objekt 15, 15' und wird von diesem zu dem optischen Detektor 13 reflektiert. Der Detektor 13 enthält eine Sammeloptik 16, die das reflektierte Licht bündelt und auf einer PD (Differential Photodiode) 17 abbildet. Der Ort, auf welchem der Lichtspot auf der PD 17 abgebildet wird, steht in einer definierten Relation zu dem Abstand des Objektes 15, 15'. Anstelle einer PD können auch zwei nebeneinander angeordnete Fotodioden vorgesehen werden.

Wie in Fig. 2 dargestellt ist, besteht bei Triangulations-Sensoren das Problem, dass sich der Weg x, um den sich der Lichtspot auf der PD 17 verschiebt, nicht linear zu dem Abstand d zwischen dem Triangulations-Sensor 10 und dem Objekt 15, 15' verändert. Solange sich das Objekt 15, 15' noch im Nahbereich des Triangulations-Sensors 10 befindet, ändert sich der Weg x des Lichtspots relativ stark im Verhältnis zu dem Abstand d, d.h. die Kurve 18 steigt zunächst relativ steil an und wird dann bei größeren Tastweiten sehr flach. Wie mit der Kurve 19 in Fig. 2 dargestellt ist, führt das zu einem praktisch umgekehrten Verlauf von Messfehlern, die mit zunehmendem Tastabstand immer größer werden. Mit der Erfindung wird erreicht, dass trotz des nichtlinearen Verlaufs der Kurve 18 ein weitgehend mit dem Tastabstand linear verlaufendes Abstandssignal gebildet wird. Dies geschieht dadurch, dass der von dem Objekt 15, 15' reflektierte Lichtstrahl in besonderer Weise auf der PD 17 abgebildet wird.

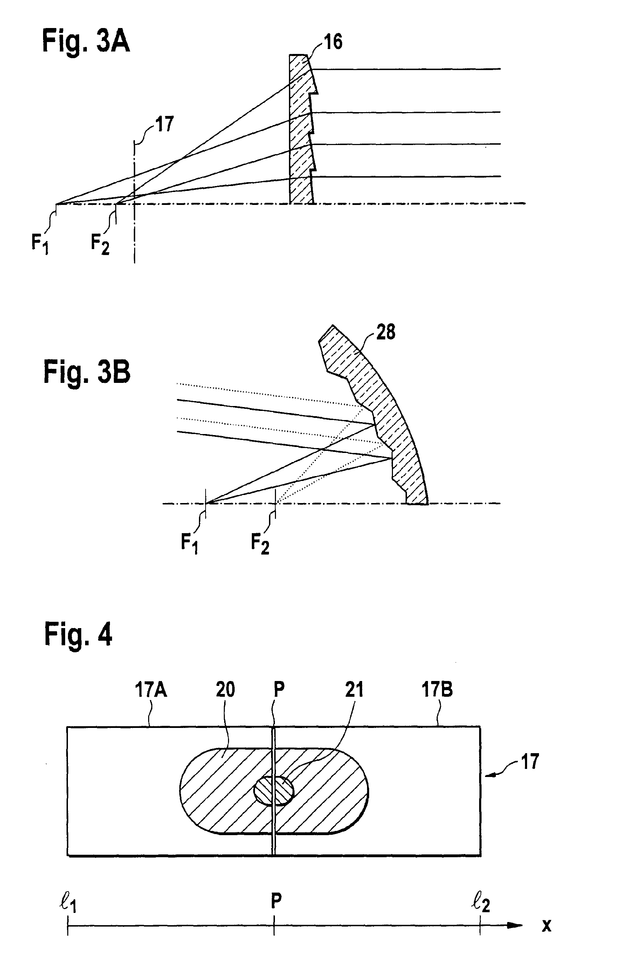

Wie aus Fig. 4 zu ersehen ist, weist die PD 17 zwei Elemente 17A, 17B auf, die an einem Spalt P aneinandergefügt sind. Von dem Element 17A wird ein Signal

$$A(p) \;=\; \int_{p-l_1}^{p} V(x)dx$$

gebildet, während von dem Element 17B das Signal

$$B(p) \;=\; \int_{p}^{p+l_2} V(x)dx$$

gebildet wird.

Dabei bedeutet:

$V(x)$ die Strahlverteilung in der Vorzugsrichtung (quer zum Spalt p) auf der PD,

p die Position des Spaltes der PD 17 und

$l_1 l_2$ die Länge der Elemente 17A, 17B der PD 17.

Aus den vorstehenden Formeln ist zu ersehen, dass durch die Wahl der Strahl-Verteilung $V(x)$ auf der PD 17 der Funktionsverlauf A (p) und B (p) sich so beeinflussen lässt, dass der Triangulations-Nichtlinearität entgegengewirkt wird. Die Form der Strahlverteilung V (x) ist von der Form des ausgesandten Strahls 14, der Form der Sammeloptik 16, der Lage der Sammeloptik 16 und der Lage der PD 17 abhängig.

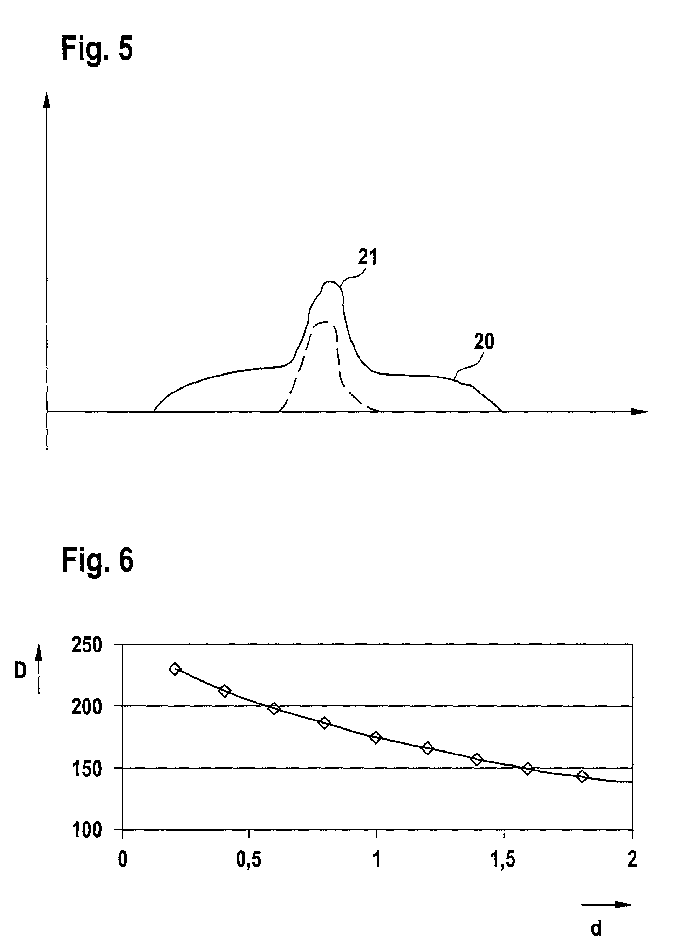

Bei dem Ausführungsbeispiel nach Fig. 3A ist die Sammeloptik 16 eine Fresnel-Linse. Diese Fresnel-Linse besitzt zwei unterschiedliche Brennweiten $F_1$ und $F_2$, wie dies ebenfalls in Fig. 3A dargestellt ist. Die PD 17 ist dicht an der Brennweite F2 angeordnet, so dass der von einem Objekt reflektierte Lichtstrahl als ein äußerer Lichtspot 20 und als ein innerer Lichtspot 21 abgebildet wird, wie dies in Fig. 4 dargestellt ist. Der größere, äußere Lichtspot 20 hat eine geringere Lichtintensität als der innere, kleinere Lichtspot 21, wie dies aus Fig. 5 zu erkennen ist. Der innere Lichtspot 21 muss keine Lichtintensität mit absolut höherem Wert haben, da sich aufgrund der Überlagerung ein Lichtspot 21 mit gegenüber dem großen Lichtspot 20 erhöhter Lichtintensität ergibt. Die PD 17 wird vorzugsweise so positioniert, das das Maximum der Strahlverteilung für ein Objekt 15 bei maximalem Tastabstand genau auf die Teilungsgrenze der PD 17 fällt, d.h. der äußere Lichtspot 20 und der innere Lichtspot 21 gleichmäßig auf die Elemente 17A, 17B der PD 17 verteilt sind. Eine im Prinzip gleiche Verteilung der Lichtintensität auf einen äußeren, breiten Lichtspot 20 und einen inneren kleineren Lichtspot 21 lässt sich auch mittels eines in Fig. 3B dargestellten, gestuften Parabolspiegels 28 erzielen, der die Lichtstrahlen mit zwei Brennpunkten $F_1$ und $F_2$ abbildet. Ein derartiger Parabolspiegel 28 hat geringere Lichtverluste, so dass der Triangulations-Sensor für größere Tastweiten eingesetzt werden kann, insbesondere wenn als Lichtsender 12 ein Laser vorgesehen ist.

Die erhaltenen Signale A und B werden nach der Formel:

$$D = \frac{A - B}{A + B}$$

oder nach der Formel

$$D = \frac{A}{A + B}$$

aufbereitet. Mit einem Triangulations-Sensor 10, der als Sammeloptik 16 eine Fresnel-Linse mit Brennweiten von 16mm und 20mm aufwies und bei welchem der Basisabstand zwischen Sender 12 und Detektor 13 etwa 23mm betrug, wurde ein Signalverlauf des Abstandssignals D über den Objektabstand d entsprechend Fig. 6 erhalten. Der Verlauf des Ausgangssignals D ist über einen Tastbereich von etwa 1,75m weitgehend linear.

Wie in Fig. 4 dargestellt ist, können die Auflösung und der nutzbare Bereich der Tastweiten noch dadurch verbessert werden, dass die Lichtspots 20, 21 in etwas langgestreckter Form abgebildet werden, d.h. in Richtung quer zu dem Spalt p zwischen den Elementen 17A, 17B der PD 17 verbreitert und/oder in Längsrichtung des Spaltes p verkleinert werden. Bei einer ersten Ausführungsform wird das dadurch erreicht, dass die Fresnel-Linse der Sammeloptik 16 nicht rund ist, sondern aus quer zum Spalt p langgezogenen Segmenten besteht. Bei einer anderen Ausführungsform werden zusätzliche zylindrische Flächen auf einer oder beiden Seiten der Sammeloptik eingesetzt, um eine anamorphotische Abbildung zu erhalten.

Bei einer abgewandelten Ausführungsform wird vorgesehen, dass eine Lichtstrahlverteilung in mehr als zwei Lichtspots 20, 21 vorgenommen wird, um der Triangulations-Nichtlinearität entgegenzuwirken. Um die Lichtstrahlverteilung vorzunehmen, sind alle optischen Mittel einsetzbar, die eine derartige Lichtstrahlverteilung gestatten, beispielsweise defraktierte Linsen oder auch gestufte Parabolspiegel.

**Patentansprüche**

1.  Triangulations-Sensor mit einem Lichtsender und mit einem aus von einem Objekt reflektiertem Licht des Lichtsenders ein Abstandssignal bildenden optischen Detektor, der wenigstens zwei nebeneinander angeordnete Empfangsflächen hat, **dadurch gekennzeichnet, dass** zwischen dem Lichtsender (12) und dem Detektor eine einen äußeren Lichtspot (20) und wenigstens einen inneren, eine höhere Intensität aufweisenden Lichtspot (21) bildende Lichtstrahlen-Verteileinrichtung angeordnet ist.

2.  Triangulations-Sensor nach Anspruch 1, **dadurch gekennzeichnet, dass** dem Detektor eine Sammeloptik (16) vorgeschaltet ist, die Mittel enthält, die das von einem Objekt (15, 15') reflektierte Licht mit wenigstens zwei unterschiedlichen Brennweiten ($F_1$, $F_2$) abbilden.

3.  Triangulations-Sensor nach Anspruch 2, **dadurch gekennzeichnet, dass** die Sammeloptik (16) eine Fresnel-Linse mit wenigstens zwei Brennweiten ($F_1$, $F_2$) enthält.

4.  Triangulations-Sensor nach Anspruch 2, **dadurch gekennzeichnet, dass** die Sammeloptik (16) einen gestuften Parabolspiegel (28) mit wenigstens zwei Brennweiten ($F_1$, $F_2$) enthält.

5.  Triangulations-Sensor insbesondere nach einem der Ansprüche 1 bis 4, **dadurch gekennzeichnet, dass** dem Detektor eine Sammeloptik (16) zugeordnet ist, die Mittel enthält, um einen Lichtspot (20, 21) quer zu einem Spalt (p) zwischen zwei Elementen (17A, 17B) des Detektors zu vergrößern und/oder in Richtung parallel zu diesem Spalt (p) zu verkleinern.

6.  Triangulations-Sensor nach Anspruch 5, **dadurch gekennzeichnet, dass** die Fresnel-Linse quer zum Spalt (p) langgezogene Segmente aufweist.

7.  Triangulations-Sensor nach Anspruch 5, **dadurch gekennzeichnet, dass** die Sammeloptik (16) Mittel zum anamorphotischen Abbilden enthält.

# Fig. 1

x

17  13

16

11

10

d

12

14  15'  15

# Fig. 2

x

18

19

d

**Fig. 3A**

16

17

F₁    F₂

**Fig. 3B**

28

F₁    F₂

**Fig. 4**

17A    20    P    21    17B

17

$\ell_1$    P    $\ell_2$

x

## Fig. 5

## Fig. 6